Europäisches Patentamt

European Patent Office

Office européen des brevets

(19)

(11) EP 0 609 129 B1

# (12) FASCICULE DE BREVET EUROPEEN

(45) Date de publication et mention
de la délivrance du brevet:
**28.04.1999 Bulletin 1999/17**

(51) Int Cl.⁶: **H04B 10/18**

(21) Numéro de dépôt: **94400145.2**

(22) Date de dépôt: **24.01.1994**

(54) **Système de transmission à solitons**

Vorrichtung zur Solitonübertragung

Soliton transmission system

(84) Etats contractants désignés:
**AT BE CH DE ES FR GB IT LI NL SE**

(30) Priorité: **28.01.1993 FR 9300856**

(43) Date de publication de la demande:
**03.08.1994 Bulletin 1994/31**

(73) Titulaire: **ALCATEL**
**75008 Paris (FR)**

(72) Inventeurs:
- **Audouin, Olivier**
**F-91600 Savigny sur Orge (FR)**
- **Hamaide, Jean-Pierre**
**F-91180 St Germain les Arpajon (FR)**

(74) Mandataire: **Bourely, Paul et al**
**c/o ALCATEL ALSTHOM,**
**Département de Propriété Industrielle,**
**30, avenue Kléber**
**75116 Paris (FR)**

(56) Documents cités:
**US-A- 4 261 639           US-A- 4 969 710**

- **PATENT ABSTRACTS OF JAPAN vol. 14, no. 301 (P-1069) 28 Juin 1990 & JP-A-02 096 120 (NTT) 06 Avril 1990**
- **PATENT ABSTRACTS OF JAPAN vol. 17, no. 182 (P-1518) 8 Avril 1993 & JP-A-04 335 619 (NTT) 24 Novembre 1992**
- **ELECTRONICS LETTERS., vol.28, no.13, 18 Juin 1992, STEVENAGE GB pages 1210 - 1212 S.V.CHERNIKOV ET AL '70 Gbit/s fibre based source of fundamental solitons at 1550 nm'**

## Description

La présente invention concerne la transmission d'information sur une fibre optique sous la forme d'impulsions optiques. Il est connu que, dans une telle fibre, la compensation de deux types d'effets peut permettre à des impulsions brèves de forme convenable, appelées "solitons", de se propager sans déformation. L'un de ces types est constitué par un effet dispersif créant une dispersion chromatique qui affecte les vitesses de propagation de groupe de ces impulsions. L'autre est constitué par des effets optiques non linéaires de type Kerr. Ce phénomène de compensation est parfois appelé "effet soliton".

Pour que cet effet soliton soit obtenu plusieurs conditions doivent être satisfaites simultanément: Tout d'abord les impulsions doivent être brèves: Pour une transmission à 10 Gbit/s, par exemple, elles doivent avoir une durée d'environ 20 ps, à mi intensité. La courbe de variation de leur intensité I en fonction du temps t doit présenter une forme définie selon l'expression

$$I = 4I_o / (e^{t/\tau} + e^{-t/\tau})^2$$

$I_o$ étant l'intensité de crête et $\tau$ étant une durée proportionnelle à la durée de l'impulsion à mi-hauteur. Elles doivent ensuite être "proches de la limite de Fourier", c'est-à-dire que le produit de leur durée par leur largeur spectrale doit être inférieur à une limite d'environ 0,7 et s'approcher autant que possible d'une limite théorique de 0,32. Enfin leur intensité doit être à peu près maintenue en cours de propagation. En ce qui concerne la fibre un rapport convenable doit être réalisé entre d'une part le produit d'une intensité de crête des impulsions optiques par une constante représentative de l'effet Kerr, d'autre part le produit du carré d'une largeur spectrale de ces impulsions par une constante représentative de l'effet de dispersion chromatique apparaissant dans chaque unité de longueur de cette fibre. Cette dernière constante est une dispersion chromatique linéique dont le produit par la longueur de la fibre constitue une dispersion chromatique globale de celle-ci c'est-à-dire une dispersion chromatique se manifestant entre l'entrée et la sortie de cette fibre. Pour l'obtention de l'effet soliton ces dispersions chromatiques linéique et globale doivent être positives, ce qui est obtenu si la longueur d'onde centrale de l'impulsion est supérieure à une longueur d'onde qui est caractéristique de la fibre et qui y annule la dispersion.

L'utilisation de l'effet soliton peut présenter des avantages importants dans les liaisons transocéaniques (6000 - 9000 km) à haut débit utilisant un codage binaire. Compte tenu du fait que les fibres optiques présentent des pertes qui provoquent un affaiblissement naturel des impulsions, les grandes distances de transmission peuvent être atteintes par la propagation des solitons dans des fibres dont les pertes sont compensées par des amplificateurs optiques. Ces derniers sont typiquement constitués par des fibres dopées à l'erbium. Ils sont répartis sur la longueur de la liaison pour limiter les variations de la puissance optique des impulsions afin de leur conserver leur caractère de solitons.

Cependant, le bruit inévitablement émis par ces amplificateurs limite les distances et les débits accessibles, ceci parce que ce bruit provoque une dégradation du rapport signal à bruit et l'apparition d'une "gigue temporelle" des impulsions à l'entrée de l'organe de réception.

Cette gigue temporelle est dite de Gordon-Haus. Elle résulte du fait que la superposition du bruit d'amplification à un soliton est équivalente à une modification de la longueur d'onde centrale de ce soliton. Ce changement de longueur d'onde provoque une variation de la vitesse de propagation dans la fibre en raison de la dispersion chromatique de cette dernière. La nature aléatoire du bruit provoque une variation aléatoire de la vitesse des différents solitons et donc, en réception, un déplacement temporel aléatoire des impulsions. Ce déplacement, qui constitue ladite gigue temporelle, est à l'origine d'un accroissement du taux des erreurs de transmission.

On peut consulter à ce sujet les deux articles suivants:

- Gordon and Mollenauer, "Effect of fiber nonlinearities and amplifier spacing on ultra-long distance transmission", J.Ligth. Technol., 9, 170 (1991).
- Gordon and Haus, "Random walk of coherently amplified solitons in optical fiber transmission", Optics Lett., 11,665 (1986)

Pour minimiser le taux d'erreur d'un système de transmission à solitons deux conditions antagonistes doivent être simultanément remplies. Selon une première condition la gigue temporelle doit être limitée ce qui amène à choisir une fibre présentant une dispersion chromatique linéique faible. Selon la deuxième condition le rapport signal à bruit doit être maintenu à une valeur suffisamment élevée. Pour cela il est nécessaire que les impulsions transmises présentent une grande énergie. Cette dernière provoque de forts effets non linéaires. Elle impose donc de choisir une fibre de ligne présentant une forte dispersion chromatique linéique qui est nécessaire pour réaliser la compensation de ces forts effets non linéaires, cette compensation étant elle même nécessaire pour obtenir l'effet soliton.

Ces deux conditions amènent à choisir une valeur intermédiaire optimale de la dispersion chromatique linéique pour minimiser le taux global d'erreurs de transmission. Lorsqu'une telle valeur optimale est réalisée, il apparaît que la dégradation du rapport signal à bruit et la gigue temporelle contribuent toute deux d'une manière importante à ce taux global minimisé.

C'est pourquoi il a été notamment proposé de limiter cette gigue temporelle. Deux méthodes connues ont été proposées pour cela. Elles agissent toutes deux en des points intermédiaires d'une liaison de grande longueur, c'est-à-dire à distance des stations d'émission et de réception.

Une première méthode est connue par un document "10 Gb/s soliton data transmission over one million kilometres", NAKAZAWA, YAMADA, KUBOTA, SUZIKI, Elect. Letters, 27, 1270 (1991). Selon cette méthode on reconstitue de place en place la forme des impulsions pour maintenir à la fois leur caractère de solitons et leurs espacements temporels mutuels.

La deuxième méthode connue a été proposée par un document "Soliton Transmission Control" MECOZZI, MOORES, HAUS, LAI, Optics Letters, 16, 1841 (1992). Elle consiste à réaliser de place en place un filtrage fréquentiel des impulsions pour maintenir la valeur de leur longueur d'onde centrale.

Ces deux méthodes connues sont coûteuses car elles présentent de grosses difficultés techniques: synchronisation des modulateurs pour la première et asservissement de la longueur d'onde centrale des filtres pour la seconde.

Le document Patent Abstracts of Japan, vol. 17, no. 182, 8 avril 1993 & JP-A-04 335 619 propose déjà de répartir des amplificateurs sur la longueur de la fibre de ligne d'un système à solitons et d'ajouter des compensateurs à dispersion négative. Ce document n'aborde cependant pas les problèmes dues à la gigue temporelle.

La présente invention a notamment pour but de limiter d'une manière simple les taux des erreurs de transmission affectant une liaison utilisant des solitons, lorsque ces erreurs résultent au moins en partie d'une gigue temporelle de Gordon-Haus affectant les impulsions reçues.

Et dans ce but elle a notamment pour objet un système de de transmission à solitons optiques tel que défini dans la revendication 1.

Le fait que la dispersion chromatique globale de cet organe de compensation soit négative entraîne que les impulsions optiques reçues par cet organe y perdent nécessairement leur caractère de solitons, c'est-à-dire qu'elles s'y déforment et, notamment, qu'elles s'y élargissent. Ceci est vrai même si cet organe est constitué par une fibre optique présentant un effet Kerr analogue à celui de la fibre de ligne. Or, il est connu qu'un tel élargissement tend à augmenter le taux d'erreurs de transmission. Il a cependant été trouvé, selon cette invention,qu'en fait la présence d'un tel organe de compensation pouvait diminuer ce taux d'erreur.

A l'aide des figures schématiques ci-jointes, on va décrire plus particulièrement ci-après, à titre d'exemple non limitatif, comment la présente invention peut être mise en oeuvre.

La figure 1 représente une vue d'un système de transmission selon la présente invention.

La figure 2 porte un diagramme représentant la variation d'une valeur optimale d'un taux de compensation, porté en ordonnées, en fonction de la dispersion chromatique linéique d'une fibre de ligne, portée en abscisses.

La figure 3 porte deux diagrammes représentant les variations d'un taux d'erreur porté en ordonnées, en fonction de la dispersion chromatique linéique d'une fibre de ligne, portée en abscisses.

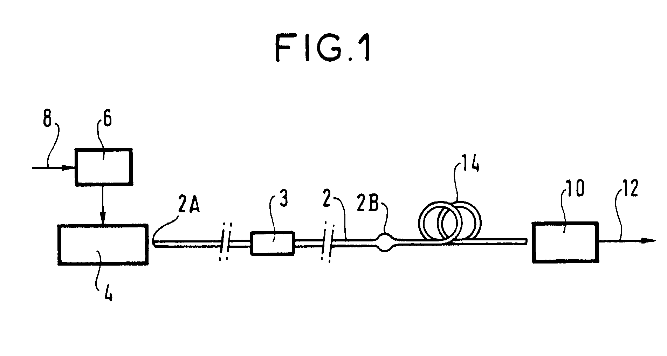

Conformément à la figure 1 un système selon cette invention comporte les éléments suivants qui sont connus quant à leurs fonctions qui vont être indiquées:

- Une fibre de ligne 2 est constituée par une fibre optique de grande longueur. Cette fibre a une entrée 2A et une sortie 2B et présente d'une part une dispersion chromatique linéique positive DL, d'autre part un effet Kerr. Cette dispersion et cet effet Kerr se compensent mutuellement pour conserver la forme d'une impulsion optique guidée par cette fibre lorsque cette impulsion présente une intensité, une durée, une forme de variation et une largeur spectrale caractéristiques d'un soliton de cette fibre. Par ailleurs cette fibre applique un affaiblissement naturel progressif aux impulsions optiques qu'elle guide. C'est pourquoi elle est munie sur sa longueur d'un moyen amplificateur 3 appliquant à ces impulsions une amplification pour compenser au moins partiellement cet affaiblissement naturel. Malheureusement ce moyen amplificateur applique en même temps à ces impulsions un déplacement spectral aléatoire parasite qui, en association avec la dispersion chromatique de cette ligne, entraîne un déplacement temporel aléatoire constituant une gigue temporelle de ces impulsions.

- Une source optique 4 fournit sur commande à l'entrée de la fibre de ligne 2 des impulsions de transmission constituant des solitons de cette fibre.

- Un circuit d'entrée de système 6 reçoit une information à transmettre représentée en 8. Il commande la source optique 4 pour lui faire fournir une succession d'impulsions de transmission. Dans cette succession les intervalles de temps entre les impulsions sont représentatifs de l'information à transmettre. Ces impulsions sont typiquement susceptibles d'être fournies seulement à des instants d'horloge se succèdant régulièrement, l'information étant représentée sous forme binaire par la présence ou l'absence d'impulsions à ces instants.

- On prévoit des moyens de compensation de la gigue temporelle.

- Enfin un récepteur 10 reçoit les impulsions de transmission à partir de la sortie 2B de la fibre de ligne.

Il traite les intervalles de temps entre ces impulsions pour restituer l'information qui était à transmettre et qui est représentée en 12.

Selon la présente invention les moyens de compensation de la gigue temporelle comportent un organe de compensation 14 transmettant les impulsions de transmission entre la sortie 2B de la fibre de ligne et le récepteur 10, et cet organe présente une dispersion chromatique globale négative corrigeant partiellement cette gigue temporelle.

On définit un taux de compensation TC tel que la valeur absolue de cette dispersion chromatique globale négative est égale au produit de ce taux de compensation par la dispersion chromatique globale positive introduite par la fibre de ligne 2. De préférence ce taux TC est compris entre 1% et 50% et de préférence encore entre 2% et 20%.

Plus précisément, la réduction de la gigue temporelle est maximale pour un taux de compensation égal à 50%. Cependant l'organe de compensation ne pouvant pas présenter l'effet soliton, il provoque un élargissement des impulsions, et donc une augmentation des erreurs résultant des interférences entre symboles successifs. C'est pourquoi il existe une valeur optimale de la dispersion de l'organe de compensation, réduisant sensiblement la gigue temporelle, sans augmenter exagérément les interférences entre symboles.

A titre d'exemple on considérera ci-après le cas d'une liaison à 5 Gb/s sur 9000 km obtenue de manière connue par la transmission de solitons de 40 ps de durée à mi-hauteur (soit 1/5 du temps bit). En l'absence de tout moyen de compensation de la gigue temporelle une dispersion chromatique linéique optimale de la fibre de ligne est positive et vaut: +0.7 ps/nm.km. Une telle liaison présente un taux d'erreur d'environ $10^{-15}$. Avec un organe de compensation selon l'invention présentant une dispersion chromatique globale négative valant: - 1620 ps/nm, c'est-à-dire un taux de compensation TC = 18%, la dispersion chromatique linéique optimale de la fibre de ligne devient 1 ps/nm.km et le taux d'erreur atteint $10^{-20}$ avec l'aide d'un filtre électrique non représenté qui est incorporé dans le récepteur 10 et qui présente une bande passante adaptée telle que 3,2 GHz.

Cet organe de compensation peut être simplement constitué par une fibre optique dite "de compensation" présentant une dispersion chromatique linéique négative valant par exemple: - 30 ps/nm.km. Une longueur optimale de cette fibre est alors de 54 km.

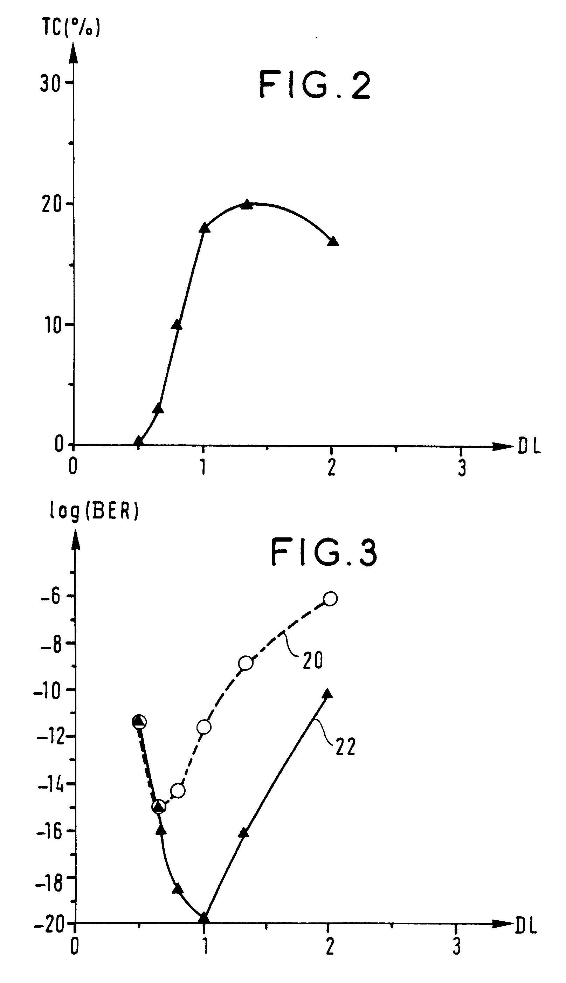

Les figures 2 et 3 sont relatives au cas précédemment mentionné, avec l'hypothèse complémentaire que le moyen amplificateur utilisé est constitué d'amplificateurs optiques localisés tels que l'amplificateur 3 et espacés de 30 km. Les dispersions chromatiques linéiques DL de la fibre de ligne sont exprimées en abscisses en ps/nm.km.

Sur la figure 2 le taux de compensation est exprimé en %.

Sur la figure 3 les ordonnées représentent le logarithme du taux d'erreur Log (BER). Le diagramme 20 correspond à l'absence de tout moyen de compensation de la gigue temporelle. Le diagramme 22 correspond à l'utilisation d'un organe de compensation optimisé conformément à la présente invention.

**Revendications**

1. Système de transmission à solitons optiques comportant :

   - une fibre de ligne de grande longueur présentant une dispersion chromatique positive pour pouvoir guider des impulsions optiques présentant la forme de solitons de cette fibre et portant une information à transmettre, et
   - des moyens amplificateurs à bruit répartis sur la longueur de cette fibre pour maintenir ces impulsions sous la forme desdits solitons,

   ce système étant caractérisé par le fait qu'il comporte un organe de compensation (14) de la gigue temporelle imposée auxdits solitons par les moyens amplificateurs disposé en aval desdits moyens amplificateurs (3) et présentant une dispersion chromatique négative élargissant lesdites impulsions optiques et leur faisant ainsi perdre leur forme de solitons, la valeur absolue globale de cette dispersion négative étant inférieure à celle de ladite dispersion positive de la fibre de ligne.

2. Système selon la revendication 1 comportant:

   - ladite fibre de ligne (2), cette fibre ayant une entrée (2A) et une sortie (2B) et présentant d'une part un effet dispersif associé à une dispersion chromatique linéique positive (DL), d'autre part un effet Kerr tels que cet effet dispersif et cet effet Kerr se compensent mutuellement pour conserver la forme d'une impulsion optique guidée par cette fibre lorsque cette impulsion présente une intensité, une durée, une forme de variation et une largeur spectrale caractéristiques d'un soliton de cette fibre, cette fibre appliquant un affaiblissement naturel progressif aux impulsions optiques qu'elle guide,
   - lesdits moyens amplificateurs (3) , ces moyens appliquant à ces impulsions une amplification pour compenser au moins partiellement ledit affaiblissement naturel, un bruit de ces moyens amplificateurs appliquant en même temps à ces impulsions un déplacement spectral aléatoire parasite qui, en association avec ledit effet dispersif de cette ligne, entraine un déplacement temporel aléatoire constituant une gigue temporelle de ces impulsions,
   - une source optique (4) pour fournir sur commande à ladite entrée de la fibre de ligne des impulsions de transmission constituant desdits solitons de cette fibre,
   - un circuit d'entrée de système (6) recevant une information à transmettre (8) et commandant ladite source optique (4) pour lui fournir une succession de dites impulsions de transmission dans laquelle les intervalles de temps entre les impulsions sont représentatifs de ladite information à transmettre,

- des moyens de compensation de la dite gigue temporelle,
- et un récepteur (10) recevant lesdites impulsions de transmission à partir de ladite sortie de la fibre de ligne, ce récepteur traitant les intervalles de temps entre ces impulsions pour restituer ladite information à transmettre (12),

ce système étant caractérisé par le fait que lesdits moyens de compensation de la gigue temporelle comportent ledit organe de compensation (14), cet organe transmettant lesdites impulsions de transmission entre ladite sortie (2B) de la fibre de ligne et ledit récepteur (10).

3. Système selon la revendication 2, caractérisé par le fait que ledit organe de compensation (14) présente une dispersion chromatique globale négative dont la valeur absolue est égale au produit de ladite dispersion chromatique linéique positive de la fibre de ligne (2) par la longueur de cette fibre et par un taux de compensation (TC) compris entre 1% et 50%.

4. Système selon la revendication 3, caractérisé par le fait que ledit taux de compensation est compris entre 2% et 20%.

5. Système selon la revendication 2, caractérisé par le fait que ledit organe de compensation (14) est constitué par une fibre optique de compensation (10).

**Claims**

1. An optical soliton transmission system including:

a very long line fiber having positive chromatic dispersion for guiding said fiber's light pulses that are in the form of solitons and that carry data to be transmitted: and
noise amplifier means distributed over the length of said fiber for maintaining said pulses in the form of said solitons;
said system being characterized by the fact that it includes a compensation member (14) for compensating the time jitter imposed on said solitons by the amplifier means disposed downstream from said amplifier means (3), and having negative chromatic dispersion widening said light pulses and causing them to lose their soliton form, the overall absolute value of said negative dispersion being lower than that of said positive dispersion of the line fiber.

2. A system according to claim 1 including:

said line fiber (2), said fiber having an input (2A) and an output (2B) and presenting firstly a dispersive effect associated with positive chromatic dispersion (DL) per unit length, and secondly a Kerr effect, such that the dispersive effect and the Kerr effect compensate each other to retain the shape of a light pulse guided by the fiber when the pulse has intensity, duration, variation in shape, and spectrum width that are characteristic of a soliton of said fiber, the fiber applying gradual natural attenuation to the light pulses guided thereby;
said amplifier means (3), said means applying amplification to the pulses so as to compensate said natural attenuation, at least in part, noise from the amplifier means simultaneously applying interfering random spectral displacement to the pulses, which displacement, in association with said dispersive effect of the line, causes a random time displacement constituting pulse time jitter;
a light source (4) for supplying transmission pulses constituting said solitons of said fiber to said input of the line fiber on command;
a system input circuit (6) receiving data to be transmitted (8) and controlling said light source (4) to supply it with a succession of said transmission pulses, in which succession the time intervals between the pulses are representative of said data to be transmitted:
compensation means for compensating said time jitter; and
a receiver (10) receiving said transmission pulses from said output of the line fiber, the receiver processing the time intervals between the pulses to restore said data to be transmitted (12);
the system being characterized by the fact that said time jitter compensation means include said compensation member (14). said member transmitting said transmission pulses between said output (2B) of the line fiber and said receiver (10).

3. A system according to claim 2, characterized by the fact that said compensation member (14) presents negative overall chromatic dispersion whose absolute value is equal to the product of said positive chromatic dispersion per unit length of the line fiber (2) multiplied by the length of the fiber and by an amount of compensation (TC) lying in the range 1% to 50%.

4. A system according to claim 3, characterized by the fact that said amount of compensation lies in the range 2% to 20%.

**5.** A system according to claim 2, characterized by the fact that said compensation member (14) is constituted by a compensation optical fiber (10).

## Patentansprüche

**1.** Vorrichtung zur Übertragung von optischen Solitons, welches aufweist:

- eine Leitungsfaser mit großer Länge, die eine positive chromatische Dispersion aufweist, um die optischen Pulse zu leiten, die die Form von Solitons dieser Faser aufweisen und eine zu übertragende Information tragen, und
- Verstärkermittel mit Rauschen, die über die Länge dieser Faser verteilt sind, um diese Pulse in der Form der Solitons zu halten,

**dadurch gekennzeichnet,** daß sie ein Kompensationselement (14) für den den Solitons durch die Verstärkermittel auferlegten Zeitjitter aufweist, das stromabwärts der Verstärkermittel (3) angeordnet ist und eine negative chromatische Dispersion aufweist, die die optischen Pulse verbreitert und sie so ihre Solitonform verlieren läßt, wobei der Gesamtabsolutwert dieser negativen Dispersion geringer als derjenige der positiven Dispersion der Leitungsfaser ist.

**2.** Vorrichtung nach Anspruch 1, welche aufweist:

- die Leitungsfaser (2), wobei diese Faser einen Eingang (2A) und einen Ausgang (2B) hat und einerseits eine mit der positiven linearen chromatischen Dispersion (DL) verbundene Streuwirkung, andererseits einen Kerr-Effekt aufweist, so daß sich diese Streuwirkung und dieser Kerr-Effekt gegenseitig kompensieren, um die Form eines von dieser Faser geleiteten optischen Pulses beizubehalten, wenn dieser Puls eine Intensität, eine Dauer, eine Variationsform und eine spektrale Breite aufweist, die für einen Soliton dieser Faser charakteristisch sind, wobei diese Faser auf die optischen Pulse, die sie leitet, eine progressive, natürliche Abschwächung anwendet,
- die Verstärkermittel (3), wobei diese Mittel auf diese Pulse eine Verstärkung anwenden, um wenigstens teilweise die natürliche Abschwächung zu kompensieren, wobei ein Rauschen dieser Verstärkermittel gleichzeitig auf diese Pulse eine unerwünschte regellose spektrale Verschiebung anwendet, die in Verbindung mit der Streuwirkung dieser Leitung eine regellose zeitliche Verschiebung zur Folge hat, die einen Zeitjitter dieser Pulse bildet,
- eine optische Quelle (4), um auf Befehl an den Eingang der Leitungsfaser Übertragungspulse zu liefern, die die Solitons dieser Faser bilden,
- eine Eingangsschaltung (6) der Vorrichtung, die eine zu übertragende Information (8) empfängt und die optische Quelle (4) steuert, um ihr eine Folge von Übertragungspulsen zu liefern, in welcher die Zeitintervalle zwischen den Pulsen die zu übertragende Information darstellen,
- Kompensationsmittel für den Zeitjitter,
- und einen Empfänger (10), der die Übertragungspulse aus dem Ausgang der Leitungsfaser aus empfängt, wobei dieser Empfänger die Zeitintervalle zwischen diesen Pulsen verarbeitet, um die zu übertragende Information (12) zu rekonstruieren,

dadurch gekennzeichnet, daß die Kompensationsmittel für den Zeitjitter das Kompensationselement (14) aufweisen, wobei dieses Element die Übertragungsimpulse zwischen dem Ausgang (2B) der Leitungsfaser und dem Empfänger (10) überträgt.

**3.** Vorrichtung nach Anspruch 2, dadurch gekennzeichnet, daß das Kompensationselement (14) eine gesamte negative chromatische Dispersion aufweist, deren Absolutwert gleich dem Produkt der positiven linearen chromatischen Dispersion der Leitungsfaser (2) mit der Länge dieser Faser und mit einem Kompensationsfaktor (TC) zwischen 1% und 50% ist.

**4.** Vorrichtung nach Anspruch 3, dadurch gekennzeichnet, daß der Kompensationsfaktor zwischen 2% und 20% liegt.

**5.** Vorrichtung nach Anspruch 2, dadurch gekennzeichnet, daß das Kompensationselement (14) aus einer Kompensationslichtleitfaser (10) besteht.

# FIG.1

FIG.2

FIG.3